(19) Europäisches Patentamt

European Patent Office

Office européen des brevets

(11) **EP 1 073 262 A2**

(12) **EUROPEAN PATENT APPLICATION**

(43) Date of publication:
**31.01.2001 Bulletin 2001/05**

(51) Int. Cl.⁷: **H04N 3/15**

(21) Application number: **00202567.4**

(22) Date of filing: **17.07.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **30.07.1999 US 364785**

(71) Applicant: **EASTMAN KODAK COMPANY
Rochester, New York 14650 (US)**

(72) Inventors:
• **Parks, Christopher
Rochester, New York 14650-2201 (US)**
• **Nichols, David Newell
Rochester, New York 14650-2201 (US)**
• **Toohey, William Joseph
Rochester, New York 14650-2201 (US)**

(74) Representative:
**Lewandowsky, Klaus, Dipl.-Ing. et al
Kodak Aktiengesellschaft,
Patentabteilung
70323 Stuttgart (DE)**

(54) **High speed image sensor**

(57)  An image sensor of the frame interline transfer type for recording images at a high frame rate is described. The photoactive array of pixels is divided into two sections. There is an array of storage pixels capable of storing multiple images from the photoactive array for each of the two sections. The frame rate is governed by the time required to transfer an image into the storage array. The frame rate may be increased by subdividing the photoactive region into smaller segments. By utilizing a smaller segment of the photoactive pixels array the transfer time to the storage region is decreased and frame rate is increased. The number of frames that can be stored in the storage pixel array is also increased.

FIG. 3

EP 1 073 262 A2

**Description**

The invention relates generally to the field of solid stated image sensors, and more specifically, to frame interline transfer sensors configured for in increased frame rate readout.

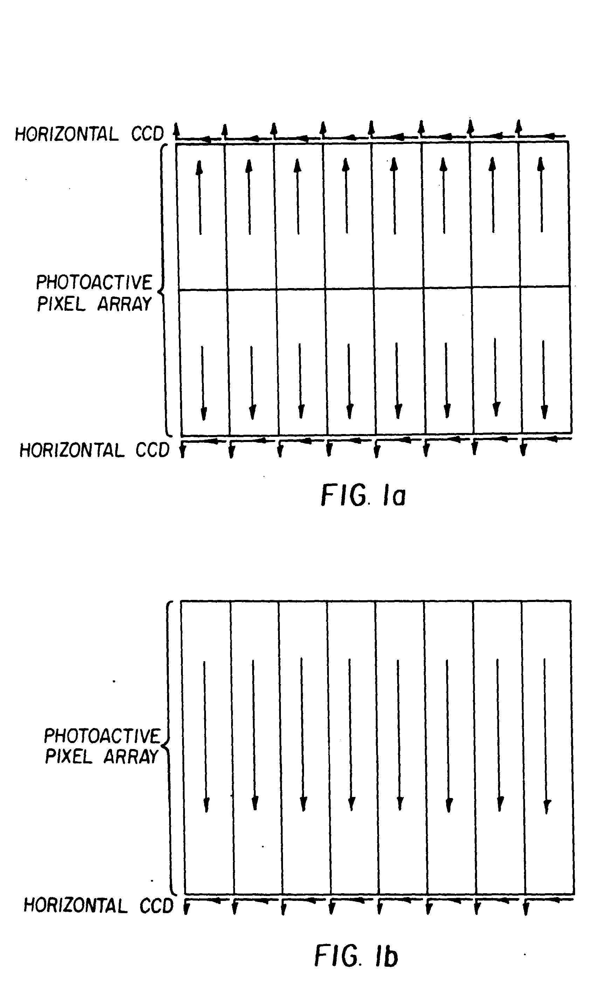

Numerous prior art teaching have illustrated devices, and methods of operating devices, intended to increase the performance of image sensing devices. High frame rate image sensors within the prior art have typically taught a photoactive pixel array split into rectangular sub-arrays of pixels, such as the high frame-rate, prior art sensor illustrated in Figures 1a and 1b. The signal from each of the sub-arrays in each of Figures 1a and 1b is read out serially through some output structure. The frame rate of the image sensor is governed by the number of sub-arrays combined with the speed of the serial output structure. The principle disadvantage of the type of arrangement shown in Figures 1a and 1b is that very high frame rates will require a large number of outputs for the pixel array. By increasing the number of outputs, a dramatic increase in the cost of a camera that employs this type of image sensor is seen. Examples of this type of image sensor are given in U.S. Patent No. 4,330,796 issued to Anagnostopoulos; and U.S. Patent No. 5,262,871 issued to Wilder.

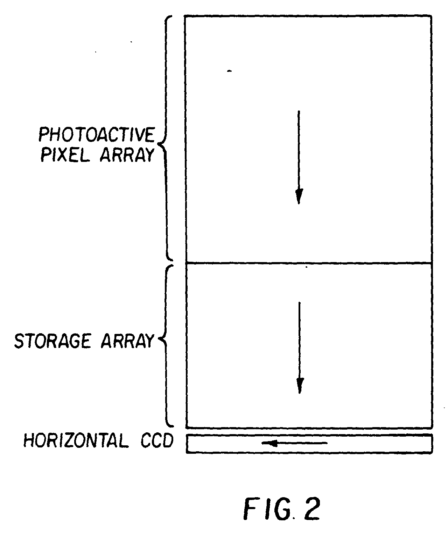

Another type of high frame rate, image sensor utilizes the type of frame transfer image sensor shown in Figure 2. This type of sensor rapidly shifts the entire photoactive pixel array into a frame storage array. If the frame storage is made to hold more than one image, then a short sequence of images may be recorded at a high frame rate. The disadvantage of this type of sensor is that the frame rate is limited by how long it takes to shift the entire photoactive array into the storage array. Examples of this type of image sensor are given in U.S. Patent Nos.: 4,635,122, Kato et al, and 4,837,630, Ueda.

From the foregoing discussion it should be readily apparent that there remains a need in the art for a high speed image sensing device that provides a high speed device while keeping the overall cost of the camera low by only requiring a small number outputs.

The present invention is directed to overcoming one or more of the problems set forth above. An image sensor for recording images at a high frame rate is described using a frame, interline transfer type a sensor. The photoactive array of pixels is divided into two sections. There is an array of storage pixels capable of storing multiple images from the photoactive array for each of the two sections. The frame rate is governed by the time required to transfer an image into the storage array. The frame rate may be increased by subdividing the photoactive region into smaller segments. By utilizing a smaller segment of the photoactive pixel array the transfer time to the storage region is decreased and frame rate is increased. The number of frames that can be stored in the storage pixel array is also increased.

Briefly summarized, according to one aspect of the present invention, a high frame rate image sensing device comprising: an array of pixels arranged in rows and columns such that the array is arranged into at least two equal sub-arrays, each pixel being capable of generating photoelectrons; a multiple phase vertical shift register allocated for each of the columns in the sub-arrays such that each of the pixels is associated with one of the shift registers; a transfer phase within the vertical shift registers that transfers photogenerated charges from the pixels into the vertical shift register; a plurality of transfer phase signals operatively connected to the transfer phases in the sub-arrays to created a plurality of zones; means for selecting a set of transfer phase signals for each of the zones to create a frame of selected pixels within the sub-array; a storage array for each of the sub-arrays operatively connected via the vertical shift registers to receive photogenerated charge from the pixels within the frames; and a horizontal shift register operatively connected to each of the storage arrays.

These and other aspects, objects, features and advantages of the present invention will be more clearly understood and appreciated from a review of the following detailed description of the preferred embodiments and appended claims, and by reference to the accompanying drawings.

FIG. 1a is a typical high frame rate sensor design within the prior art;
FIG. 1b is a typical high frame rate sensor design within the prior art;
FIG. 2 is a typical prior art frame type image transfer device;
FIG. 3 is a high frame rate transfer device as envisioned by the present invention;
FIG. 4 is a diagram illustrating the arrangement of one pixel;
FIG. 5 is a diagram illustrating the arrangement of zones within the pixel array; and

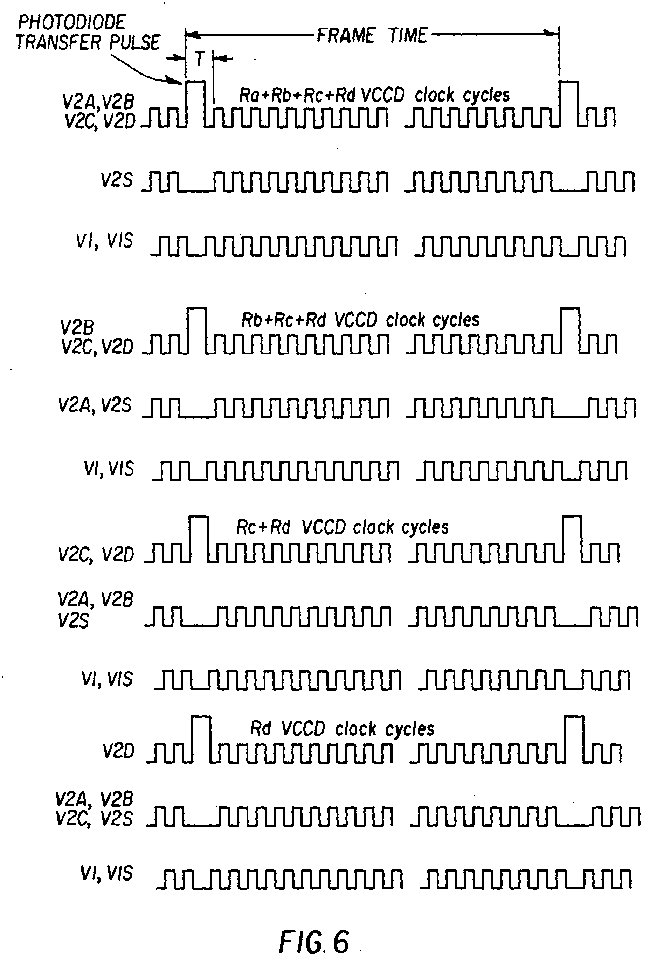

FIG. 6 is a timing diagram for the high frame rate transfer device as envisioned by the present invention.

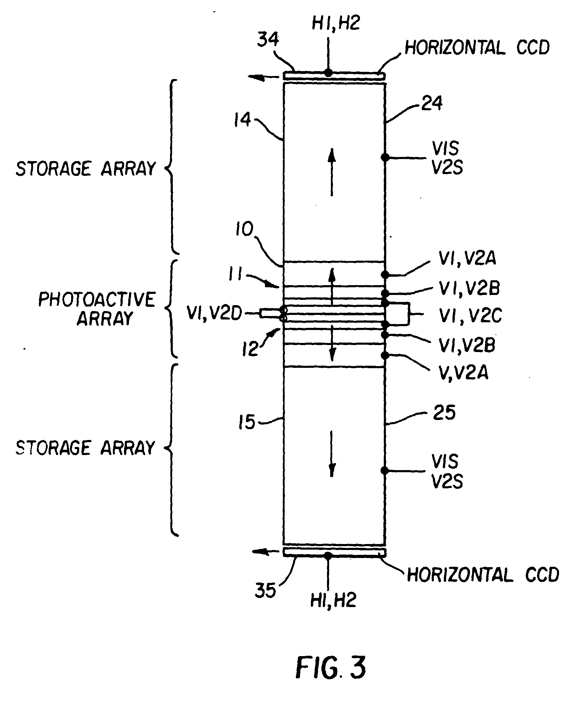

The present invention overcomes the shortcomings of the prior art devices, such as those shown in Figures 1a, 1b and 2. The image sensor as envisioned by the present invention, and shown in Figure 3 consists of a photoactive pixel array 10 arranged in rows and columns, with two light shielded storage pixel arrays 14, 15. The preferred embodiment envisions that photoactive pixel array 10 be split into two pixel array halves 11, 12. Additionally, the pixel array 10 is divided into four zones A, B, C, and D with each of the top half of the pixel array 11 and the bottom half of the pixel array 12 having one half of each of the zones A, B, C, and D. The top pixel array half 11 employs top half vertical shift registers (VCCDs 24) to shift charge into the top storage pixel array 14. In a similar manner the bottom half of pixel array 12 will use bottom half vertical shift registers (VCCDs 25) to shift charge into the bottom storage pixel array 15. There are two horizontal CCDs 34, 35 provided to remove charge from the vertical CCDs 24, 25 for each of the top and bottom storage pixel arrays 14, 15.

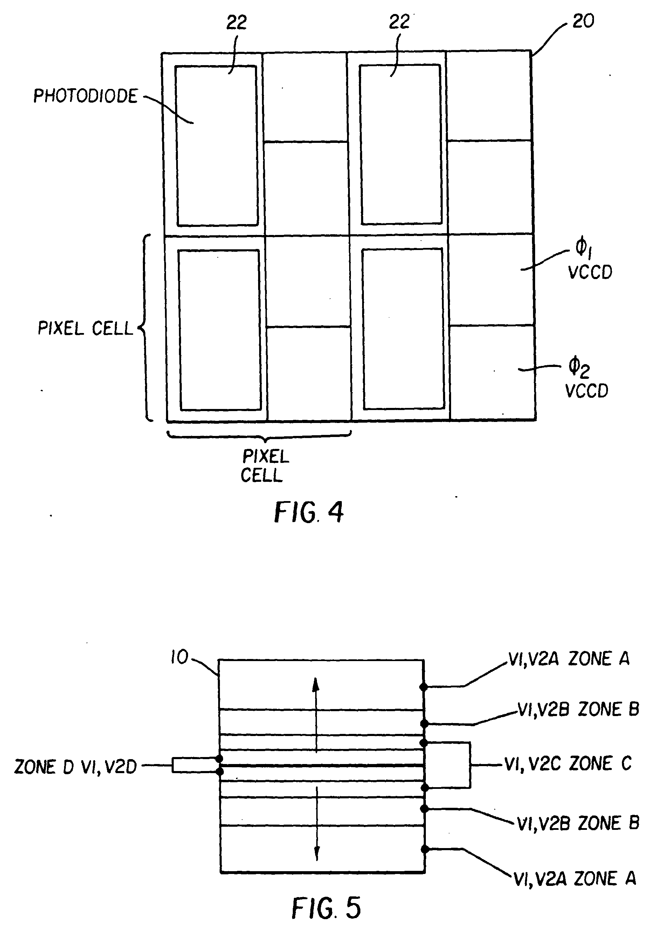

Figure 4 illustrates a block of four of pixels 20 within the photoactive pixel array 10. Each pixel 20 as seen in Fig. 4 is presumed to be in the same zone, accordingly, the control signals for each of the four pixels 20 will be the same. However, it should be understood that for pixels indifferent zones A, B, C and D the control signals (here the vertical shift register pulses) would be different. Returning to the instance illustrated in Fig. 4, each of the four pixels 20 has a photodiode 22 adjacent to a cell in one of the vertical shift registers (VCCD 24, 25). The cell for the vertical shift register has two phases $\phi 1$, $\phi 2$. At the beginning of each frame, $\phi 2$ of the vertical CCD shift register (VCCD) for zones that are used in forming a frame is pulsed to transfer photoelectrons from the photodiodes 22 into the VCCDs 24, 25. After this photodiode readout pulse, the VCCDs 24, 25 rapidly shift the photoelectrons from every column of the photoactive pixels array into the storage pixel arrays 14, 15.

If the photoactive pixel array 10 is $m$ pixels (columns) horizontally and $n$ pixels (rows) vertically, then the VCCDs 24, 25 in the top and bottom halves are $n/2$ pixels long. After $n/2$ clock cycles of the VCCD, the entire image frame will be transferred into the storage pixel arrays 14, 15. In the preferred embodiment, the transfer of the image frame from the photoactive pixel array 10 to the storage pixel arrays 14, 15 is repeated until storage pixel arrays 14, 15 are full. If the storage pixel arrays 14, 15 each contain $m$ columns and $k$ rows, then the storage capacity of each of the storage pixel arrays 14, 15 will be shown as illustrated in Equation 1 below:

$$\text{Number of frames stored} = 2*k/n \qquad \text{Equation 1}$$

As should be clearly evident from equation 1, the storage pixel storage arrays 14, 15 can store multiple frames. By selecting certain zones A, B, C, and D, the size of the top and bottom pixel arrays 11, 12 that are stored within the pixel storage arrays 14, 15 can be optimized for individual systems and uses. If each of the top and bottom pixel arrays 11, 12 having $n/2$ rows have all zones selected such that $n/2$ equals $k$, then the storage capacity is one top frame and one bottom frame.

If the time to transfer photoelectrons from the photodiodes to the VCCD is $T$, the frequency of the VCCD clock is $f$, then the frame rate in frames per second (FPS) is illustrated by Equation 2.

$$\text{Frames Per Second} = f/(fT + n/2) \qquad \text{Equation 2}$$

Figure 5 shows a photoactive pixel array similar to that shown in Figure 3. The top and bottom halves of the photoactive pixel array are sectioned into three zones. Zone A contains Ra rows, zone B contains Rb rows, zone C contains Rc rows, and zone d contains Rd rows where $Ra + Rb + Rc + Rd = n/2$. The photodiode readout pulse may be selectively applied to the $\phi 2$ phase of the vertical CCD shift register (VCCD) for zones that are used in forming a frame is pulsed to transfer photoelectrons from the photodiodes 22 into the VCCDs 24, 25. Therefore, each zone requires separate $\phi 2$ clocks indicated in Fig. 5 as V2A, V2B, V2C, and V2D. Referring to Figure 3, the photoelectrons are shifted through each zone of the VCCDs 24, 25 and into the storage pixel arrays 14, 15 by applying timing signals to the V1, V2A, V2B, V2C, V2D, V1S, and V2S input lines. As can be seen on Fig. 3, viewed in conjunction with Fig. 7, V1S and V2S are used to clock pixel data through storage pixel arrays 14, 15. Accordingly, V1S and V2S are not active during a third level clocking on the $\phi 2$ clocks during which charge is transferred from the photodiodes to the vertical shift registers, this is to prevent pixel data gaps from occurring within the vertical shift registers.

By applying the photodiode readout pulse to all four zones, photoelectrons from every photodiode will be transferred into the VCCD. It will then require $Ra + Rb + Rc + Rd$ clock cycles of the VCCD to shift the image into the storage pixel array. The frame rate will be as shown by Equation 3.

$$\text{Frame rate per second} = f/(fT + Ra + Rb + Rc + Rd) \qquad \text{Equation 3}$$

If the photodiode readout pulse is only applied to zones B, C, and D, then only zones B, C, and D will transfer photoelectrons from the photodiodes to the VCCD. The VCCD in zone A will not receive photoelectrons from the photodiodes. Zone A has now become part of the frame storage pixel array. Now it will require $Rb + Rc + Rd$ VCCD clock cycles to transfer the image into the storage pixel array. The frame rate will be $f/(fT + Rb + Rc + Rd)$.

If the photodiode readout pulse is only applied to zones C and D, then only zones C and D will transfer photoelectrons from the photodiodes to the VCCD. The VCCD in zones A and B will not receive photoelectrons from the photodiodes. Zones A and B have now become part of the frame storage pixel array. Now it will require (Rc+Rd) VCCD clock cycles to transfer the image into the storage pixel array. The frame rate will be $f/(fT + Rc + Rd)$.

If the photodiode readout pulse is only applied to zone D, then only zone D will transfer photoelectrons from the photodiodes to the VCCD. The VCCD in zones A, B, and C will not receive photoelectrons from the photodiodes. Zones A, B, and C have now become part of the frame storage pixel array. Now it will require *Rd* VCCD clock cycles to transfer the image into the storage pixel array. The frame rate will be $f/(fT+Rd)$.

By sectioning the photoactive array into these zones with independent photodiode readout pulses, the number of rows in the photoactive area and frame rate may be varied. Each one of the various frame rates would be available on one image sensor. The number of frames stored in the frame store would increase with smaller zones. For example, consider an embodiment where the photodiode readout time is 1.8 μs, the VCCD clock frequency is 5Mhz and the number of rows in each zone is listed in Table 1 below:

Table 1

|  | Number of Rows |
|---|---|
| Zone A | 96 |
| Zone B | 48 |
| Zone C | 24 |
| Zone D | 24 |
| Frame Store | 29952 |

The recording rate in frames per second of this embodiment, as well as the number of frames that are stored in the frame store, are listed in Table 2 below:

Table 2

| Number of Columns | Total number of imaging rows | Frame Rate (frames/sec) | Frame store capacity |
|---|---|---|---|
| 512 | 384 | 25,000 | 78 |
| 512 | 192 | 47,000 | 157 |
| 512 | 96 | 87,000 | 315 |
| 512 | 48 | 151,000 | 631 |

As indicated by the previous table, this image sensor allows the number of rows in the image to be decreased in order to obtain very high frame rates. The advantage over the prior art is the ability to select the resolution and frame rate to best match the requirements of the imaging application.

**Claims**

1. A high frame rate image sensing device comprising:

an array of pixels arranged in rows and columns such that the array is arranged into at least two equal sub-arrays, each pixel being capable of generating photoelectrons;
a multiple phase vertical shift register allocated for each of the columns in the sub-arrays such that each of the pixels is associated with one of the shift registers;
a transfer phase within the vertical shift registers that transfers photogenerated charges from the pixels into the vertical shift register;
a plurality of transfer phase signals operatively connected to the transfer phases in the sub-arrays to created a plurality of zones;
means for selecting a set of transfer phase signals for each of the zones to create a frame of selected pixels within the sub-array;
a storage array for each of the sub-arrays operatively connected via the vertical shift registers to receive photogenerated charge from the pixels within the frames; and
a horizontal shift register operatively connected to each of the storage arrays.

**2.** The image sensing device of claim 1 wherein each of the sub-arrays have the same set of zones.

**3.** The image sensing device of claim 1 wherein the vertical shift registers within the storage arrays have phases that are independent from the vertical shift registers in the sub-arrays.

**4.** The image sensing device of claim 1 wherein the storage areas can hold an integral number of frames.

**5.** The image sensor of claim 1 wherein the frame rate can be increased by selecting less than all the zones.

**6.** A method for forming a high frame rate image sensing device comprising the steps of:

   providing an array of pixels arranged in rows and columns such that the array is arranged into at least two equal sub-arrays, each pixel being capable of generating photoelectrons with a multiple phase vertical shift register allocated for each of the columns in the sub-arrays such that each of the pixels is associated with one of the shift registers;
   forming a transfer phase within the vertical shift registers that transfers photogenerated charges from the pixels into the vertical shift register;
   connecting a plurality of transfer phase signals operatively connected to the transfer phases in the sub-arrays to created a plurality of zones;
   selecting a set of transfer phase signals for each of the zones to create a frame of selected pixels within the sub-array;
   operatively connecting a storage array for each of the sub-arrays via the vertical shift registers to receive photogenerated charge from the pixels within the frames; and
   operatively connecting a horizontal shift register to each of the storage arrays.

**7.** The method of claim 6 wherein the providing step further comprises providing each of the sub-arrays have the same set of zones.

**8.** The method of claim 6 wherein the vertical shift registers within the storage arrays have phases that are independent from the vertical shift registers in the sub-arrays.

**9.** The method of claim 1 wherein the frame rate can be increased by selecting less than all the zones.

**10.** The image sensor of claim 9 wherein any unselected zones become part of the storage arrays.

FIG. Ia

FIG. Ib

PHOTOACTIVE
PIXEL ARRAY

STORAGE ARRAY

HORIZONTAL CCD

FIG. 2

FIG. 3

FIG. 4

FIG. 5

FIG. 6